# EUROPÄISCHE PATENTSCHRIFT

(11) **EP 1 810 778 B1**
(45) Veröffentlichungstag und Bekanntmachung des Hinweises auf die Patenterteilung: **16.07.2008**
(21) Anmeldenummer: 06000973.5
(22) Anmeldetag: 18.01.2006
(51) Int. Cl.: B23Q 3/155, B23Q 3/157

(54) **Werkzeug-Magazin mit einem Speicher-Rad mit zwei Reihen von Werkzeug-Aufnahmen am Umfang**
Tool magazine with a storage wheel with two peripherical rows of tool holders
Magasin à outils en forme de roue avec deux rangées périphériques de porte-outils

(43) Veröffentlichungstag der Anmeldung: 25.07.2007
(73) Patentinhaber: Hüller Hille GmbH, 74821 Mosbach (DE)
(72) Erfinder: Schmauder, Horst, 72555 Metzingen (DE)
(74) Vertreter: Rau, Manfred

(56) Entgegenhaltungen:
- DE-A1- 4 015 460
- US-A- 4 119 213
- US-A- 6 077 206

## Beschreibung

Die Erfindung betrifft ein Werkzeug-Magazin mit einem Speicher-Rad, das um seine Drehachse drehantreibbar angeordnet ist und das im Bereich seines Umfangs mit Werkzeug-Aufnahmen versehen ist.

Bei einem derartigen aus der US-PS 6,077,206 bekannten Werkzeug-Magazin werden die einzelnen Werkzeuge auf dem Umfang des Speicher-Rades derart gehalten, dass ihre Längsachsen parallel zur Drehachse des Speicher-Rades angeordnet sind. Die Entnahme oder das Ablegen eines Werkzeugs erfolgt direkt über das an der Spindel der Werkzeugmaschine angebrachte Spannfutter, wobei der Transport der Spindel mit Spannfutter über den üblichen Kreuzschlitten der Werkzeugmaschine erfolgt. Dies ist möglich, da die Halte-Elemente der Werkzeuge in Richtung der Drehachse über das Speicher-Rad vorstehen und somit direkt mit dem Spannfutter der Spindel der Werkzeugmaschine angefahren werden können. Zur Aufnahme eines einzelnen und/oder weniger besonders voluminöser Werkzeuge ist im Umfang des Speicher-Rades eine größere Ausnehmung vorgesehen, in der solche besonders großen Werkzeuge untergebracht werden können, damit der Gesamtumfang des mit Werkzeugen bestückten Speicher-Rades nicht zu groß wird. Diese Ausnehmung dient also der Platz-Einsparung. Das Speichervolumen dieses bekannten Speicher-Rades ist begrenzt.

Weiterhin sind Werkzeug-Magazine bekannt, die nach Art eines Regals aufgebaut sind, in denen Werkzeuge gespeichert werden. Der Transport von Werkzeugen von einer Werkzeugmaschine zu diesem Regal oder umgekehrt erfolgt mittels Werkzeug-Wechslern, die entsprechende Greifer aufweisen.

DE-4015460-A offenbart ein Werkzeug-Magazin mit mehreren übereinander angeorneten Werkzeugspeichereinheiten und einer Verfahrbahren Werkzeug-Übergabe-Einrichtung.

Der Erfindung liegt die Aufgabe zugrunde, ein Werkzeug-Magazin der eingangs geschilderten Art so auszubilden, dass das Speicher-Volumen so groß wie möglich wird bzw. das entsprechend geringen Platzbedarf hat.

Diese Aufgabe wird erfindungsgemäß durch die Merkmale des Anspruches 1 gelöst. Durch die erfindungsgemäße Lösung wird erreicht, dass beide Stirnseiten des Speicher-Rades im Umfangsbereich mit Werkzeug-Aufnahmen versehen sind und demzufolge zur Speicherung von Werkzeugen ausgenutzt werden können. Mittels der im Anspruch 1 angegebenen Werkzeug-Übergabe-Einrichtung ist es möglich, von beiden Stirnseiten des Speicher-Rades aus Werkzeuge zum Werkzeug-Wechsler oder umgekehrt vom Werkzeug-Wechsler zum Speicher-Rad hin zu transportieren und in dieses einzusetzen.

Durch die Weiterbildung nach Anspruch 2 wird erreicht, dass die schweren Teile eines Werkzeugs möglichst nahe zur Drehachse des Speicher-Rades an diesem befestigt werden, so dass die Trägheit des Speicher-Rades - bezogen auf eine vorgegebene Zahl von Werkzeug-Aufnahmen - möglichst klein wird. Die Mittel-Längs-Achsen der Werkzeuge, um die diese auf der Werkzeugmaschine drehangetrieben werden, verlaufen also radial zur Drehachse des Speicher-Rades.

Die Ansprüche 3 bis 7 geben eine besonders einfache Ausgestaltung der Werkzeug-Übergabe-Einrichtung wieder.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine perspektivische Darstellung eines Werkzeug-Magazins nach der Erfindung,
- Fig. 2: eine weitere perspektivische Darstellung des Werkzeug-Magazins aus einer der Blickrichtung nach Fig. 1 im Wesentlichen entgegengesetzten Blickrichtung,
- Fig. 3 bis 6: vier Positionen eines Transport-Schlittens mit Werkzeug-Spanner des Werkzeug-Magazins nach der Erfindung in schematischer Darstellung.

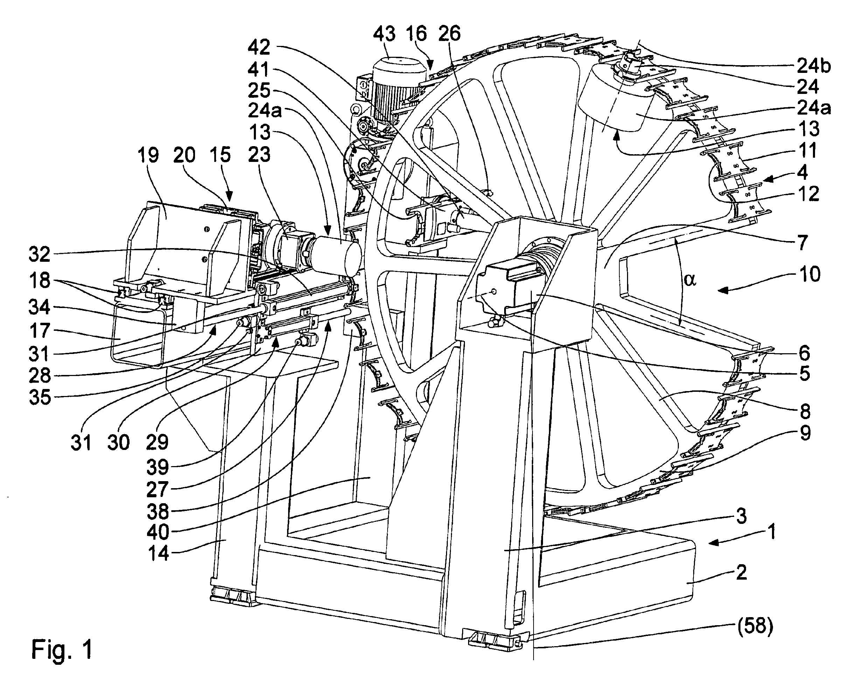

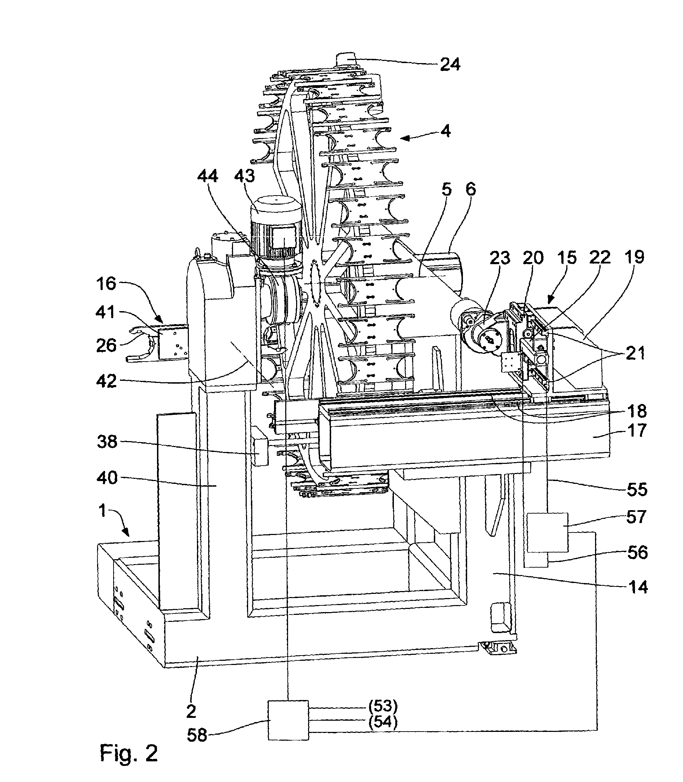

Das in den Fig. 1 und 2 dargestellte Werkzeug-Magazin weist ein Gestell 1 auf, das über einen unteren Grund-Rahmen 2 auf dem Boden abstützbar ist. Auf dem Grund-Rahmen 2 ist eine Säule 3 angebracht, an deren oberem Ende ein Speicher-Rad 4 um eine horizontale Drehachse 5 drehbar gelagert ist. Ein Drehantrieb dieses Speicher-Rades 4 erfolgt mittels eines ebenfalls an der Säule 3 angebrachten Elektro-Motors 6. Das Speicher-Rad 4 weist an einer zentralen Nabe 7 angebrachte, radial zur Drehachse 5 nach außen verlaufende Speichen 8 auf, die wiederum einen äußeren teilkreisförmigen Kranz 9 tragen. Dieser Kranz 9 ist zwischen zwei einander benachbarten Speichen 8 unterbrochen, so dass das Speicher-Rad 4 in diesem - in Fig. 1 rechts dargestellten - Bereich nach außen offen ist, also eine Durchlass-Öffnung 10 aufweist. Im vorliegenden Ausführungsbeispiel erstreckt sich diese Durchlass-Öffnung 10 beispielsweise über einen Umfangswinkel α von 30°.

Am Kranz 9 sind über dessen gesamte Erstreckung zwei Reihen von Werkzeug-Aufnahmen 11,12 angebracht, in die auf Werkzeugmaschinen einzusetzende Werkzeuge 13 eingeschoben bzw. aus diesen herausgenommen werden können. Derartige, die Werkzeuge 13 federnd haltende Werkzeug-Aufnahmen 11 bzw. 12 sind in der Praxis allgemein bekannt. Wie aus den Fig. 1 und 2 hervorgeht, sind die Reihen von Werkzeug-Aufnahmen 11, 12 - in Richtung der Drehachse 5 gesehen - auf beiden Seiten des Kranzes 9 angebracht, und zwar die erste Reihe von Werkzeug-Aufnahmen 11 auf der in Fig. 1 hinteren Seite des Kranzes 9 und die zweite Reihe von Werkzeug-Aufnahmen 12 auf der vorderen Seite des Kranzes 9. Die Werkzeug-Aufnahmen 11, 12 stehen in Richtung der Drehachse 5 jeweils über den Kranz 9 vor, so dass sie in Richtung der Drehachse 5 frei zugänglich sind. Die Werkzeug-Aufnahmen 11 bzw. die Werkzeug-Aufnahmen 12 sind in Umfangsrichtung des Kranzes 9 jeweils so weit voneinander beabstandet, dass in zwei in Richtung der Drehachse 5 benachbarten Werkzeug-Aufnahmen 11 bzw. 12 Werkzeuge 13 aufgenommen werden können; ihr Abstand ist aber so gering, dass kein Raum verschenkt wird. Wie Fig. 1 erkennen lässt, werden die Werkzeuge 13 radial zur Achse 5 in den Aufnahmen 11, 12 gehalten.

Auf dem Grund-Rahmen 2 ist weiterhin eine Trag-Säule 14 für eine Werkzeug-Übergabe-Einrichtung 15 vorgesehen. Mittels dieser Übergabe-Einrichtung 15 werden Werkzeuge 13 aus dem Speicher-Rad 4 entnommen und zu einem Werkzeug-Wechsler 16 transportiert bzw. dem Werkzeug-Wechsler 16 entnommen und zum Speicher-Rad 4 transportiert und auf letzteres übergeben.

Die Werkzeug-Übergabe-Einrichtung 15 weist einen horizontalen Träger 17 auf, auf dem parallel zur Drehachse 5 Führungs-Schienen 18 angebracht sind, auf denen ein Transport-Schlitten 19 verschiebbar angeordnet ist. An diesem Transport-Schlitten 19 ist wiederum ein weiterer Werkzeug-Halte-Schlitten 20 horizontal und senkrecht zur Drehachse 5 auf Führungs-Schienen 21 verschiebbar angebracht. Dieser Halte-Schlitten 20 ist mittels eines 2-Stellungs-Antriebs 22 antreibbar, der als einfacher pneumatisch beaufschlagbarer Kolben-Zylinder-Antrieb ausgebildet ist. Am Werkzeug-Halte-Schlitten 20 ist ein Werkzeug-Spanner 23 angeordnet, mit dem in üblicher Weise der Halte-Konus 24 eines Werkzeugs 13 gespannt und damit das Werkzeug 13 festgehalten werden kann. Der Antrieb 22 dient dazu, den Werkzeug-Spanner 23 über den ihm zugewandten Halte-Konus 24 eines Werkzeugs 13 zu schieben, das entweder in einer der Aufnahmen 11 bzw. 12 des Speicher-Rades 4 oder in einem Greifer 25 bzw. 26 des Werkzeug-Wechslers 16 sich befindet. Der Antrieb 22 dient also nur dazu, den Werkzeug-Spanner 23 über einen solchen Halte-Konus 24 zu schieben, oder von diesem abzuziehen.

Der Transport-Schlitten 19 wird mittels eines 4-Stellungs-Antriebs 27 zwischen vier Positionen verschoben. Hierzu weist dieser Antrieb 27 zwei durch pneumatisch beaufschlagbare Kolben-Zylinder-Antriebe gebildete 2-Stellungs-Antriebe 28, 29 und einen Antriebs-Schlitten 30 auf. Dieser im Wesentlichen aus einer Platte bestehende Antriebs-Schlitten 30 ist auf Führungs-Schienen 31 horizontal und parallel zur Drehachse 5 verschiebbar gelagert. Die Führungs-Schienen 31 befinden sich an der in Fig. 1 sichtbaren Seite des Trägers 17 unterhalb des Transport-Schlittens 19. Der in Fig. 1 obere 2-Stellungs-Antrieb 28 weist einen Zylinder 32 auf, der an dem Antriebs-Schlitten 30 befestigt ist. Weiterhin weist er eine Kolbenstange 33 auf, die mit einem unteren Widerlager 34 des Transport-Schlittens 19 verbunden ist. Zugeordnet zu diesem Widerlager 34 ist am Antriebs-Schlitten 30 ein Anschlag 35 ausgebildet, gegen den dieses Widerlager 34 bei in den Zylinder 32 eingefahrener Kolbenstange 33 zur Anlage kommt, wodurch eine Position des Transport-Schlittens 19 relativ zum Antriebs-Schlitten 30 festgelegt wird.

Unterhalb des ersten 2-Stellungs-Antriebs 28 ist der zweite 2-Stellungs-Antrieb 29 angebracht, dessen Zylinder 36 ebenfalls am Antriebs-Schlitten 30 befestigt ist. Seine Kolbenstange 37 ist an einem ortsfesten Widerlager 38 befestigt, das an einer weiter unten noch anzusprechenden Wechsler-Säule 40 angebracht ist. Am Antriebs-Schlitten 30 ist ein weiterer Anschlag 39 angebracht, der bei in den Zylinder 36 eingefahrener Kolbenstange 37 am Widerlager 38 zur Anlage kommt, und damit die Lage des Antriebs-Schlittens bei eingefahrener Kolbenstange 37 relativ zum Träger 17 und damit auch zum Werkzeug-Wechsler 16 festlegt.

Der Werkzeug-Wechsler 16 weist die bereits erwähnte, auf dem Grund-Rahmen 2 angebrachte Wechsler-Säule 40 auf, an der die beiden an einem gemeinsamen Wechsel-Arm 41 ausgebildeten Greifer 25, 26 angeordnet sind. Der Wechsel-Arm 41 mit den Greifern 25, 26 ist um eine horizontale und senkrecht zur Drehachse 5 verlaufende Schwenk-Achse 42 drehantreibbar, und zwar mittels eines Schwenk-Motors 43 über ein Getriebe 44. Der Wechsel-Arm 41 kann jeweils um 180° geschwenkt werden, wobei sich die beiden Greifer 25, 26 in einer horizontalen Ebene befinden, die sich in der Verfahrebene des Werkzeug-Spanners 23 befindet. Derartige Greifer 25, 26 einschließlich ihrer Anbringung an einem Arm 41 sind allgemein bekannt und in der Praxis üblich.

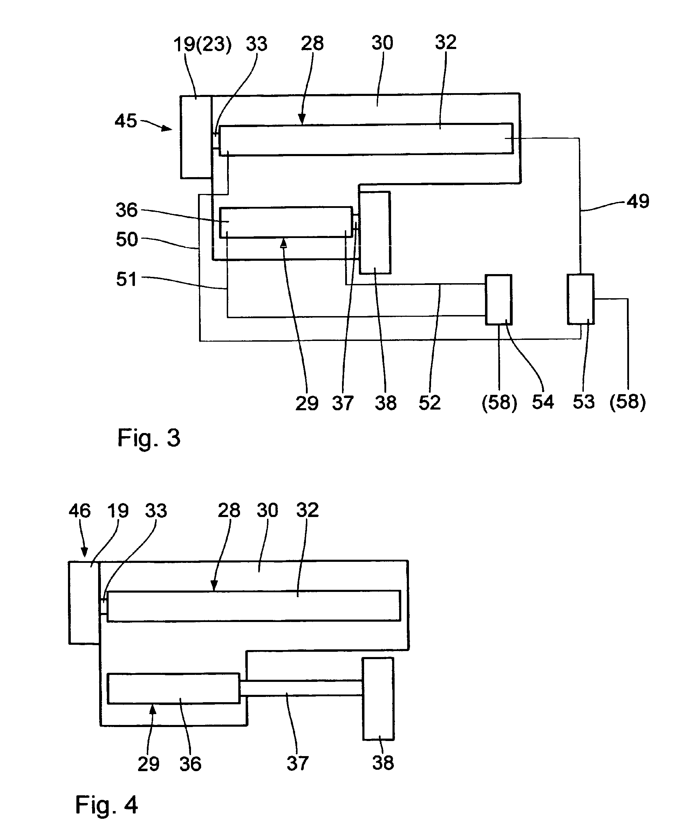

Die Arbeitsweise wird anhand der Fig. 3 bis 6 erläutert.

Gemäß der Darstellung in Fig. 3 sind beide Antriebe 28, 29 eingefahren, d. h. die Kolbenstangen 33, 37 sind in die Zylinder 32 bzw. 36 eingefahren. Der Antriebs-Schlitten 30 und der Transport-Schlitten 19 befinden sich in ihrer dem Werkzeug-Wechsler 16 nächstbenachbarten Position. Der Werkzeug-Spanner 23 befindet sich in einer ersten Position 45, in der er in Überdeckung mit dem dem Speicher-Rad 4 zugewandten Greifer 25 ist. In dieser ersten Position 45 kann entweder ein Werkzeug 13 vom Werkzeug-Spanner 23 auf einen Greifer 25 oder 26 übergeben oder aus diesem entnommen werden.

Gemäß der Darstellung in Fig. 4 ist der 2-Stellungs-Antrieb 28 nach wie vor eingefahren, die Kolbenstange 37 ist aber aus dem Zylinder 36 des 2-Stellungs-Antriebs 29 ausgefahren. In dieser zweiten Position 46 des Werkzeug-Spanners 23 befindet sich dieser in Überdeckung mit einer Werkzeug-Aufnahme 11 des Speicher-Rades 24 und setzt ein Werkzeug 13 in diese ein oder entnimmt ein Werkzeug 13 aus dieser.

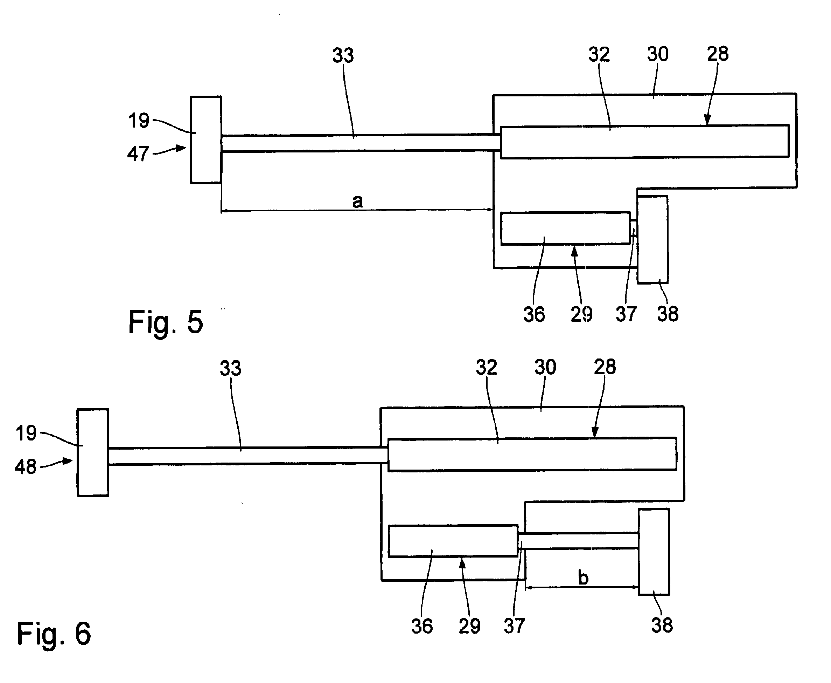

In der in Fig. 5 dargestellten Position ist die Kolbenstange 37 des Antriebs 29 wiederum in den Zylinder 36 des Antriebs 29 eingefahren. Demgegenüber ist aber die Kolbenstange 33 aus dem Zylinder 32 ausgefahren. Da der Hub a des 2-Stellungs-Antriebs 28 größer ist als der Hub b des 2-Stellungs-Antriebs 29, befindet sich der Werkzeug-Spanner 23 in einer dritten Position 47, die weiter vom Werkzeug-Wechsler 16 entfernt ist als die zweite Position 46. Wie der Zeichnung entnehmbar ist, befindet sich der Antriebs-Schlitten 30 hierbei wiederum in derselben Position wie die gemäß Fig. 3. In dieser dritten Position 47 befindet sich der Werkzeug-Spanner 23 in Überdeckung mit einer Werkzeug-Aufnahme 12 und kann in dieser Position in einer solchen Werkzeug-Aufnahme 12 dort ein Werkzeug 13 abgeben oder aufnehmen.

In der Position gemäß Fig. 6 sind wiederum beide Antriebe 28, 29 ausgefahren, d. h. der Werkzeug-Spanner 23 befindet sich in einer vierten Position 48, in der er auf der dem Werkzeug-Wechsler 16 abgewandten Seite des Speicher-Rades 4 auch völlig frei von den zugeordneten Werkzeug-Aufnahmen 12 ist. Beide Kolbenstangen 33, 37 sind ausgefahren. Der Antriebs-Schlitten 30 befindet sich in der gleichen Position wie in Fig. 4.

### Der Werkzeugwechsel geht nun wie folgt vonstatten:

Im Werkzeug-Spanner 23 befindet sich ein Werkzeug 13, das zum Werkzeug-Wechsler 16 gebracht werden soll. Hierzu wird der Transport-Schlitten 19 mit dem Werkzeug-Spanner 23 und dem Werkzeug 13 in die erste Position 45 verfahren und hierbei in den Greifer 25 eingeschoben. Der Werkzeug-Spanner 23 wird gelöst und der Werkzeug-Halte-Schlitten 20 durch entsprechende Beaufschlagung des Antriebes 22 derartig verfahren, dass der Werkzeug-Spanner 23 von dem Halte-Konus 24 des im Greifer 25 befindlichen Werkzeugs 13 abgezogen wird. Anschließend wird der Wechsel-Arm 41 um 180° gedreht, so dass ein in dem Greifer 26 befindliches Werkzeug 13 wiederum vor den Werkzeug-Spanner 23 gelangt. Bei diesem Werkzeug handelt es sich um ein solches, das aus der benachbarten nicht dargestellten Werkzeugmaschine entnommen wurde, um es gegen das zuletzt erwähnte im Werkzeug-Wechsler 16 zugeführte Werkzeug 13 auszutauschen. Der Antrieb 22 wird in umgekehrter Richtung betätigt, so dass der Werkzeug-Spanner 23 auf den Halte-Konus 24 des zuletzt erwähnten Werkzeugs 13 aufgeschoben wird. Wenn dieses nun vom Werkzeug-Spanner 23 neu aufgenommene Werkzeug 13 in einer dem Werkzeug-Wechsler 16 zugewandten Werkzeug-Aufnahme 11 abgesetzt bzw. abgelegt werden soll, dann wird der Transport-Schlitten 19 in die in Fig. 4 dargestellte Position verfahren, in der das Werkzeug 13 in eine Werkzeug-Aufnahme 11 des Speicher-Rades 4 eingeschoben wird. Die Freigabe des in der Werkzeug-Aufnahme 11 besetzten Werkzeuges 13 erfolgt in der geschilderten Weise durch Lösen und Verfahren des Werkzeug-Spanners 23 mittels des Antriebs 22.

Wenn dagegen das abzulegende Werkzeug 13 in einer Werkzeug-Aufnahme 12 abgelegt werden soll, die sich auf der dem Werkzeug-Wechsler 16 abgewandten Seite des Speicher-Rades 4 befindet, dann muss das Speicher-Rad 4 sich in einer Position befinden, in der sich die Öffnung 10 in der Bewegungsbahn des Werkzeug-Spanners 23 mit einem Werkzeug 13 befindet, so dass der Transport-Schlitten 19 in die in Fig. 6 dargestellte vierte Position 48 des Werkzeug-Spanners 23 verfahren werden kann. Das vom Werkzeug-Spanner 23 gehaltene Werkzeug wird hierbei durch den durch die Durchlass-Öffnung 10 gebildeten Freiraum hindurch geführt. Wenn sich der Werkzeug-Spanner 23 in der in Fig. 6 dargestellten vierten Position 48 befindet, wird das Speicher-Rad 4 derart verdreht, dass die das Werkzeug 13 aufnehmende Werkzeug-Aufnahme 12 in der Bewegungsbahn des Werkzeug-Spanners 23 mit dem Werkzeug 13 befindet. Der Transport-Schlitten 19 wird nunmehr in die in Fig. 5 dargestellte dritte Position 47 des Werkzeug-Spanners 23 verfahren, wobei das von diesem gehaltene Werkzeug 13 in die gewünschte Werkzeug-Aufnahme 12 eingeschoben wird. Das Lösen des Werkzeug-Spanners 23 vom Halte-Konus 24 dieses Werkzeugs erfolgt dann wieder in der geschilderten Weise. Die Entnahme eines Werkzeugs 13 aus einer Werkzeug-Aufnahme 11 erfolgt in umgekehrter Reihenfolge. Der Arbeits-Kopf 24a des Werkzeugs 13 befindet sich bei den geschilderten Bewegungsabläufen stets radial innerhalb des Speicher-Rades 4, ist also der Drehachse 5 zugewandt; seine Mittel-Längs-Achse 24b erstreckt sich radial zur Drehachse 5.

Die Druckluftbeaufschlagung der Antriebe 28 und 29 erfolgt über Druckluft-Leitungen 49, 50 bzw. 51, 52, die jeweils für einen Antrieb 28 bzw. 29 über ein Magnetventil 53 bzw. 54 beaufschlagt bzw. entlüftet werden. In gleicher Weise wird der Antrieb 22 über Druckluft-Leitungen 55, 56 mit Druckluft beaufschlagt bzw. entlüftet, wozu ein Magnet-Ventil 57 vorgesehen ist. Die Magnet-Ventile 53, 54 und 57 und die Motoren 6 und 43 werden von einer zentralen Steuerung 58 angesteuert. Dies gilt auch für die nicht dargestellte Betätigung des Werkzeug-Spanners 23 beim Spannen bzw. Lösen eines Halte-Konus 24 eines Werkzeugs 23.

Anstelle der fluidisch beaufschlagbaren Kolben-Zylinder-Antriebe 28, 29 kann der Antrieb des Transport-Schlittens 19 auch mittels eines ServoMotors über einen Spindel-Trieb erfolgen, wobei der Servo-Motor zum Anfahren der erwähnten Positionen 45, 46, 47, 48 von der zentralen Steuerung 58 angesteuert wird.

## Patentansprüche

1. Werkzeug-Magazin
- mit einem Speicher-Rad (4),
-- das um eine Drehachse (5) drehantreibbar angeordnet ist,
-- das an seinem Umfang mit einer ersten und einer zweiten Reihe von Werkzeug-Aufnahmen (11, 12) versehen ist, die in Richtung der Drehachse (5) einander entgegengesetzt angeordnet sind und
-- das an seinem Umfang eine Durchlass-Öffnung (10) aufweist,
- mit einem Werkzeug-Wechsler (16),
-- der mindestens einen Werkzeug-Greifer (25, 26) aufweist und
-- der auf einer der ersten Reihe von Werkzeug-Aufnahmen (12) zugewandten Seite des Speicher-Rades (4) angeordnet ist und
- mit einer Werkzeug-Übergabe-Einrichtung (15),
-- die einen parallel zur Drehachse (5) verfahrbaren Transport-Schlitten (19) aufweist,
-- die einen dem Speicher-Rad (4) zugewandten, auf dem Transport-Schlitten (19) angeordneten Werkzeug-Spanner (23) aufweist und
-- die einen 4-Stellungs-Antrieb (27) zum Verfahren des Transport-Schlittens (19) zwischen vier Positionen (45 bis 48) aufweist, von denen
--- die erste Position (45) am Werkzeug-Wechsler (16),
--- die zweite Position (46) vor der ersten Reihe von Werkzeug-Aufnahmen (11),
--- die dritte Position (47) vor der zweiten Reihe von Werkzeug-Aufnahmen (12) und
--- die vierte Position (48) auf der vom Werkzeug-Wechsler (16) abgewandten Seite der dritten Position (47)
sich befindet.

2. Werkzeug-Magazin nach Anspruch 1, **dadurch gekennzeichnet, dass** die Werkzeug-Aufnahmen (11, 12) zur Aufnahme eines Werkzeugs (13) in der Weise ausgebildet sind, dass ein Halte-Abschnitt (24) des Werkzeuges (13) sich auf der radial außenliegenden Seite des Speicher-Rades (4) befindet und ein Arbeits-Abschnitt (24a) der Drehachse (5) zugewandt ist.

3. Werkzeug-Magazin nach Anspruch 2, **dadurch gekennzeichnet, dass** der Werkzeug-Spanner (23) auf einem radial zur Drehachse (5) verfahrbaren Werkzeug-Halte-Schlitten (20) angeordnet ist.

4. Werkzeug-Magazin nach einem der Ansprüche 1 bis 3, **dadurch gekennzeichnet,**
**dass** der 4-Stellungs-Antrieb (27) durch zwei 2-Stellungs-Antriebe (28, 29) gebildet wird.

5. Werkzeug-Magazin nach Anspruch 4, **dadurch gekennzeichnet, dass** die 2-Stellungs-Antriebe (28, 29) durch fluidisch beaufschlagbare Kolben-Zylinder-Antriebe gebildet sind.

6. Werkzeug-Magazin nach Anspruch 5, **dadurch gekennzeichnet, dass** ein parallel zum Transport-Schlitten (19) verschiebbar geführter Antriebs-Schlitten (30) vorgesehen ist, an dem jeweils ein erstes Ende des ersten und des zweiten 2-Stellungs-Antriebes (28, 29) befestigt ist und
dass ein zweites Ende des ersten 2-Stellungs-Antriebes (28) am Transport-Schlitten (19) angebracht ist und
dass ein zweites Ende des zweiten 2-Stellungs-Antriebes (29) ortsfest befestigt ist.

7. Werkzeug-Magazin nach Anspruch 5, **dadurch gekennzeichnet, dass** der erste 2-Stellungs-Antrieb (28) einen Hub a und der zweite 2-Stellungs-Antrieb (29) einen Hub b aufweist und
**dass** gilt: a > b.

8. Werkzeug-Magazin nach einem der Ansprüche 1 bis 7, **dadurch gekennzeichnet,**
**dass** der Werkzeug-Wechsler (16) zwei Greifer (25, 26) aufweist, die abwechselnd mit dem Werkzeug-Spanner (23) in Überdeckung bringbar sind.

## Claims

1. Tool magazine
- having a storage wheel (4),
-- that is arranged around its rotational axis (5) to be rotatably drivable,
-- that is fitted, on its circumference, with a first row and a second row of tool receivers (11, 12), arranged opposite to each other in the direction of rotational axis (5) and
-- that exhibits on its circumference a passage opening (10),
- having a tool changer (16),
-- that exhibits at least one tool gripper (25, 26) and
-- that is arranged on a storage wheel (4) side facing the first row of tool receivers (12) and
- having a tool handover device (15),
-- that exhibits a transport slide (19) that is movable in parallel to the rotational axis (5),
-- that exhibits a tool clamping device (23) which faces the storage wheel (4) and which is arranged on the transport slide (19) and
-- that exhibits a 4-position drive (27) to move the transport slide (19) between four positions (45 to 48), of which
--- a first position (45) is at the tool changer (16),
--- a second position (46) is in front of the first row of tool receivers (11),
--- a third position (47) is in front of the second row of tool receivers (12) and
--- a fourth position (48) is on a side of the third position (47) facing away from the tool changer (16).

2. Tool magazine according to claim 1, **characterised in that**
the tool receivers (11, 12) are designed for the receipt of a tool (13) in such a way that a holding section (24) of the tool (13) is located on a radially outward side of the storage wheel (4), and that a working section (24a) is facing the rotational axis (5).

3. Tool magazine according to claim 2, **characterised in that**
the tool clamping device (23) is arranged on a tool-holding slide (20) that is movable radially to the rotational axis (5).

4. Tool magazine according to one of claims 1 to 3, **characterised in that** the 4-position drive (27) is formed by two 2-position drives (28, 29).

5. Tool magazine according to claim 4, **characterised in that**
the 2-position drives (28, 29) are formed by fluidically actuatable piston-cylinder drives.

6. Tool magazine according to claim 5, **characterised in that**
there is provided a drive slide (30), which is slidably guided parallel to the transport slide (19) and to which there is affixed, in each case, a fist end of the first and the second 2-position drive (28, 29) and
**that** a second end of the first 2-position drive (28) is attached to the transport slide (19) and
**that** a second end of the second 2-position drive (29) is stationarily affixed.

7. Tool magazine according to claim 5, **characterised in that**
the first 2-position drive (28) exhibits a lift a and the second 2-position drive (29) exhibits a lift b and
**that** the following applies: a > b.

8. Tool magazine according to one of claims 1 to 7, **characterised in that** the tool changer (16) exhibits two grippers (25, 26) which are alternately movable to overlap with the tool clamping device (23).

## Revendications

1. Magasin à outils
- avec une roue à rayons (4)
-- qui est montée de manière à pouvoir être entraînée en rotation autour d'un axe de rotation (5),
-- qui comporte sur son pourtour une première et une deuxième rangée de logements d'outil (11, 12), qui sont disposés en étant opposés l'un à l'autre dans la direction de l'axe de rotation (5), et
-- qui comporte une ouverture de passage (10) sur son pourtour,
- avec un dispositif de changement d'outil (16),
-- qui comporte au moins un organe de préhension (25, 26), et
-- qui est disposé sur un côté de la roue à rayons (4), orienté vers la première rangée de logements d'outils (12), et
- avec un dispositif de transfert d'outils (15),
-- qui comporte un chariot de transport (19) apte à se déplacer parallèlement à l'axe de rotation (5),
-- qui comporte un tendeur d'outil (23), orienté vers la roue à rayons (4) et disposé sur le chariot de transport (19), et
-- qui comporte un système d'entraînement à 4 positions (27) pour déplacer le chariot de transport (19) entre quatre positions (45 à 48), parmi lesquelles
--- la première position (45) est située sur le dispositif de changement d'outil (16),
--- la deuxième position (46) est située devant la première rangée de logements d'outils (11),
--- la troisième position (47) est située devant la deuxième rangée de logements d'outils (12), et
--- la quatrième position (48) est située sur le côté de la troisième position (47), opposé au dispositif de changement d'outil (16).

2. Magasin à outils selon la revendication 1, **caractérisé**
**en ce que** les logements d'outil (11, 12) destinés à recevoir un outil (13) sont réalisés de telle sorte qu'une partie de retenue (24) de l'outil (13) est située sur le côté radialement extérieur de la roue à rayons (4), et une partie de travail (24a) est orientée vers l'axe de rotation (5).

3. Magasin à outils selon la revendication 2, **caractérisé**
**en ce que** le tendeur d'outil (23) est disposé sur un chariot de retenue d'outil (20), apte à être déplacé dans le sens radial par rapport à l'axe de rotation (5).

4. Magasin à outils selon l'une quelconque des revendications 1 à 3, **caractérisé**
**en ce que** le système d'entraînement à 4 positions (27) est formé par deux systèmes d'entraînement à 2 positions (28, 29).

5. Magasin à outils selon la revendication 4, **caractérisé**
**en ce que** les systèmes d'entraînement à 2 positions (28, 29) sont formés par des systèmes d'entraînement à piston et cylindre aptes à être sollicités par un fluide.

6. Magasin à outils selon la revendication 5, **caractérisé**
**en ce qu'**il est prévu un chariot d'entraînement (30), qui est guidé de manière mobile en translation parallèlement au chariot de transport (19) et auquel est fixée respectivement une première extrémité du premier et du deuxième système d'entraînement à 2 positions (28, 29), et
**en ce qu'**une deuxième extrémité du premier système d'entraînement à 2 positions (28) est attachée au chariot de transport (19), et
**en ce qu'**une deuxième extrémité du deuxième système d'entraînement à 2 positions (29) est localement fixe.

7. Magasin à outils selon la revendication 5, **caractérisé**
**en ce que** le premier système d'entraînement à 2 positions (28) a une longueur de course a et le deuxième système d'entraînement à 2 positions (29) a une longueur de course b, et
**en ce que** a est supérieur à b.

8. Magasin à outils selon l'une quelconque des revendications 1 à 7, **caractérisé**
**en ce que** le dispositif de changement d'outil (16) comporte deux éléments de préhension (25, 26), qui peuvent être amenés en alternance en recouvrement avec le tendeur d'outil (23).
